# EUROPEAN PATENT SPECIFICATION

(11) **EP 3 187 905 B1**
(45) Date of publication and mention of the grant of the patent: **30.10.2019**
(21) Application number: 16191987.3
(22) Date of filing: 30.09.2016
(51) Int. Cl.: G01V 5/00

(54) **HUMAN BODY SECURITY INSPECTION SYSTEM AND METHOD FOR HUMAN BODY SECURITY INSPECTION PERFORMED BY USING THE SYSTEM**
SYSTEM ZUR SICHERHEITSÜBERPRÜFUNG DES MENSCHLICHEN KÖRPERS UND BEI DER VERWENDUNG DES SYSTEMS DURCHGEFÜHRTES VERFAHREN ZUR SICHERHEITSÜBERPRÜFUNG DES MENSCHLICHEN KÖRPERS
SYSTÈME D'INSPECTION DE SÉCURITÉ DU CORPS HUMAIN ET PROCÉDÉ D'INSPECTION DE SÉCURITÉ DU CORPS HUMAIN EFFECTUÉ À L'AIDE DU SYSTÈME

(30) Priority: 28.12.2015 CN 201511001494
(43) Date of publication of application: 05.07.2017
(73) Proprietor: Nuctech Company Limited, Beijing 100084 (CN)
(72) Inventor: CHEN, Zhiqiang, Beijing 100084 (CN); ZHAO, Ziran, Beijing 100084 (CN); LI, Yuanjing, Beijing 100084 (CN); WU, Wanlong, Beijing 100084 (CN); TANG, Le, Beijing 100084 (CN); RUAN, Ming, Beijing 100084 (CN)
(74) Representative: Carpmaels & Ransford LLP

(56) References cited:
- CN-U- 203 299 146
- JP-A- 2004 069 575

## Description

### BACKGROUND OF THE INVENTION

### Field of the Invention

The present disclosure relates to a system of inspecting forbidden objects that is carried or hidden on and in a human body and a method performed by using the system. Particularly, The present disclosure relates to a human body security inspection system and a method for human body security inspection performed by using the system.

### Description of the Related Art

In prior arts, there are provided various human body security inspection systems and methods. Generally, the prior art human body security inspection system includes an X-ray radiation generator, an X-ray detector, an imaging device, and an inspected person carrying device. The X-ray radiation generator is configured to emit X-ray radiation, which scan a person to be inspected on the inspected person carrying device, the X-ray detector is configured to receive X-ray radiation transmitted through the human body to be inspected and generate a transmission signal, and the imaging device is configured to form an X-ray radiation transmission image of the inspected person based on the transmission signal, such that it can be determined whether or not the inspected person carries or hides any forbidden object based on the transmission image.

Quality of the X-ray radiation transmission image depends on dosage of the X-ray radiation transmitting through the human body, and it is well known that there exist individual differences among the persons to be inspected. Thus, in case that the X-ray radiation generator provides X-ray radiation with the same dosage, the individual difference between the persons to be inspected will result in that the X-ray radiation passing through the different human bodies have different dosages, and is mainly a difference in weight of the persons to be inspected.

For example, the weight of a heavier person to be inspected may be twice the weight of a lighter person to be inspected, which will result in difference in quality of obtained X-ray radiation transmission image if the X-ray radiation generator provides X-ray radiation with the same dosage.

In order to achieve security inspection effects, it is necessary for the security inspection system in an existing apparatus to provide X-ray radiation with larger dosage so that when a heavier person is inspected, it can obtain an image with sufficient definition for identifying the forbidden objects, which will result in that when a lighter person is inspected, the person absorbs a larger dosage of X-ray radiation, causing harmfulness in radiation security for the inspected person.

### SUMMARY

Embodiments of the present disclosure provide a human body security inspection system and a method, which enables identification of the weight of a person to be inspected and adjustment of radiation parameters and scan parameters based on the identification result, thereby not only meeting requirements for imaging quality but also decreasing dosage of radiation received by the inspected person.

According to an aspect of the present disclosure, there is provided a human body security inspection system, comprising:
an X-ray source configured to provide X-ray radiation for scanning a human body to be inspected,
a detector configured to receive X-ray radiation transmitting through the human body to be inspected and generate a transmission signal,
a sensor configured to obtain the weight of the human body to be inspected,
a carrying device configured to carry and move the human body to be inspected in a direction such that the human body is scanned, and
a controller configured to receive a signal from the sensor, determine the weight of the human body to be inspected based on the signal from the sensor, and determine and control a voltage or current applied to the X-ray source and a movement speed of the carrying device according to the weight.

In an embodiment of the present disclosure, it is set that a threshold of the weight is g, the voltage applied to the X-ray source is U, the current applied to the X-ray source is I, and the movement speed of the carrying device is v, such that if the weight of the person to be inspected is g, and the corresponding voltage applied to the X-ray source is U, the corresponding current applied to the X-ray source is I and the corresponding movement speed of the carrying device is v, an X-ray radiation transmission image of a person to be inspected, which meets inspection requirements, is allowed to be obtained; and the controller is further configured to control the voltage applied to the X-ray source to be U, the current applied to the X-ray source to be I and the movement speed of the carrying device to be v, when the weight of the person to be inspected sensed by the sensor is not less than g.

In an example which does not form part of the claimed invention, it is set that a threshold of the weight is g, the voltage applied to the X-ray source is U, the current applied to the X-ray source is I, and the movement speed of the carrying device is v, such that if the weight of the person to be inspected is g, and the corresponding voltage applied to the X-ray source is U, the corresponding current applied to the X-ray source is I and the corresponding movement speed of the carrying device is v, an X-ray radiation transmission image of a person to be inspected, which meets inspection requirements, is allowed to be obtained; and the controller is further configured to control the voltage applied to the X-ray source to be less than the voltage U, or control the current applied to the X-ray source to be less than the current I, or control the movement speed of the carrying device to be larger than the movement speed v, when the weight of the person to be inspected sensed by the sensor is less than g.

In an example which does not form part of the claimed invention, it is set that a threshold of the weight is g, the voltage applied to the X-ray source is U, the current applied to the X-ray source is I, and the movement speed of the carrying device is v, such that if the weight of the person to be inspected is g, and the corresponding voltage applied to the X-ray source is U, the corresponding current applied to the X-ray source is I and the corresponding movement speed of the carrying device is v, an X-ray radiation transmission image of a person to be inspected, which meets inspection requirements, is allowed to be obtained; and the controller is further configured to control the voltage applied to the X-ray source to be less than the voltage U and control the current applied to the X-ray source to be less than the current I.

In an embodiment of the present disclosure, it is set that a threshold of the weight is g, the voltage applied to the X-ray source is U, the current applied to the X-ray source is I, and the movement speed of the carrying device is v, such that if the weight of the person to be inspected is g, and the corresponding voltage applied to the X-ray source is U, the corresponding current applied to the X-ray source is I and the corresponding movement speed of the carrying device is v, an X-ray radiation transmission image of a person to be inspected, which meets inspection requirements, is allowed to be obtained; and the controller is further configured to control the voltage applied to the X-ray source to be less than the voltage U and control the movement speed of the carrying device to be larger than the movement speed v, when the weight of the person to be inspected sensed by the sensor is less than g.

In an embodiment of the present disclosure, it is set that a threshold of the weight is g, the voltage applied to the X-ray source is U, the current applied to the X-ray source is I, and the movement speed of the carrying device is v, such that if the weight of the person to be inspected is g, and the corresponding voltage applied to the X-ray source is U, the corresponding current applied to the X-ray source is I and the corresponding movement speed of the carrying device is v, an X-ray radiation transmission image of a person to be inspected, which meets inspection requirements, is allowed to be obtained; and the controller is further configured to control the current applied to the X-ray source to be less than the current I and control the movement speed of the carrying device to be larger than the movement speed v, when the weight of the person to be inspected sensed by the sensor is less than g.

In an embodiment of the present disclosure, it is set that a threshold of the weight is g, the voltage applied to the X-ray source is U, the current applied to the X-ray source is I, and the movement speed of the carrying device is v, such that if the weight of the person to be inspected is g, and the corresponding voltage applied to the X-ray source is U, the corresponding current applied to the X-ray source is I and the corresponding movement speed of the carrying device is v, an X-ray radiation transmission image of a person to be inspected, which meets inspection requirements, is allowed to be obtained; and the controller is further configured to control the voltage applied to the X-ray source to be less than the voltage U, control the current applied to the X-ray source to be less than the current I, and control the movement speed of the carrying device to be larger than the movement speed v, when the weight of the person to be inspected sensed by the sensor is less than g.

In an embodiment of the present disclosure, the sensor is arranged at an entering position or an initial position of the carrying device, such that once the human body to be inspected enters the carrying device, the weight of the human body to be inspected is allowed to be obtained by sensor.

In an embodiment of the present disclosure, the carrying device is one of a conveyer belt, a pallet and an escalator.

According to another aspect of the present disclosure, there is provided method for human body security inspection performed by using the human body security inspection system as described above, the method comprising:
a step of obtaining the weight of the human body, which comprises obtaining the weight of the human body by the sensor after the human body to be inspected enters the human body security inspection system,
a step of scanning the human body, which comprises acquiring information about the weight of the human body from the sensor by the controller, and controlling by the controller, based on the information about the weight of the human body, the voltage or current applied to the X-ray source and the movement speed of the carrying device so that the human body is scanned, and
a step of finishing the security inspection, which comprises obtaining the X-ray radiation transmission image of the human body based on the scanning of the human body, thereby finishing the security inspection of the human body.

Other features and advantages of the present disclosure will become more apparent by describing in detail exemplary embodiments thereof with reference to the accompanying drawings, which may help comprehensive understanding of the present disclosure.

### BRIEF DESCRIPTION OF THE DRAWINGS

Features and advantages of the present disclosure can be understood more clearly with reference to the accompanying drawings, which are illustrative and should not be construed as a limit to the invention. In the drawings:
Fig. 1 is a schematic diagram of a human body security inspection system according to an embodiment of the present disclosure;
Fig. 2 is a schematic diagram showing a variation of the embodiment shown in Fig. 1;
Fig. 3 is schematic diagram showing another variation of the embodiment shown in Fig. 1;
Fig. 4 is a schematic diagram of a human body security inspection system according to another embodiment of the present disclosure;
Fig. 5 is a schematic diagram showing a variation of the embodiment shown in Fig. 4; and
Fig. 6 is a schematic diagram of a human body security inspection system according to a further embodiment of the present disclosure.

### DETAILED DESCRIPTION OF PREFERRED EMBODIMENTS OF THE INVENTION

Technical solutions of the present disclosure will be further described in detail in combination with exemplary embodiments with reference to the attached drawings. In the description, the same or like reference numbers refer to the same or like elements. The following description of exemplary embodiments of the present disclosure made with reference to the attached drawings is intended to illustrate the general inventive concepts of the present disclosure, and should not be interpreted as being limitative to the present disclosure.

Further, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

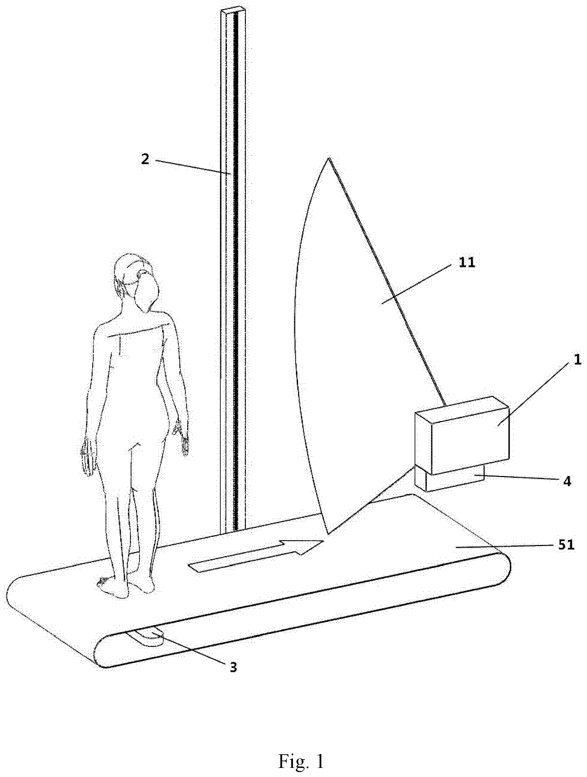

Figs. 1-6 show various embodiments of human body security inspection system according to the present disclosure respectively.

As shown in Fig. 1, there is shown a human body security inspection system according to the present disclosure. The human body security inspection system comprises: an X-ray source 1 configured to provide X-ray radiation for scanning a human body to be inspected, a detector 2 configured to receive X-ray radiation transmitting through the human body to be inspected and generate a transmission signal, a sensor 3 configured to obtain the weight of the human body to be inspected, a carrying device 51 configured to carry and move the human body to be inspected in a direction such that the human body is scanned, and a controller 4 configured to receive a signal from the sensor, determine the weight of the human body to be inspected based on the signal from the sensor, and determine and control a voltage or current applied to the X-ray source and a movement speed of the carrying device according to the weight.

According to embodiments of the present disclosure, the X-ray source may comprise an X-ray machine, as shown in Fig. 1, rays provided by which are collimated into a fan beam 11. Here, the present disclosure is not limited to the X-ray machine, and other radiation beam apparatuses may be applied by those skilled in the art as the X-ray source.

In the embodiment shown in Fig. 1, the sensor 3 is arranged within the carrying device 51 such that once the human body to be inspected lands on the carrying device, the sensor can obtain the weight of the human body to be inspected. In the embodiment shown in Fig. 1, the carrying device 51 is a conveyer belt. The sensor 3 is arranged in the conveyer belt 51, that is, when the person to be inspected is located at an end of the conveyer belt 51 and begins to be security inspected, the sensor 3 arranged in the conveyer belt 51 may obtain the weight of the person to be inspected. Of course, the above arrangement and location of the sensor 3 are not limitative to the present disclosure, and those skilled in the art may arrange the sensor at other locations, for example, at a position in front of the conveyer belt. In a word, it is only required that the weight of the human body to be inspected can be obtained by the sensor before the person prepares to be security inspected.

For an X-ray source in prior arts, its radiation dosage is generally determined depending on a voltage and a current applied to the X-ray source, and a scanning speed is determined depending on a movement speed of the inspected person; if the inspected person keeps stationary on the carrying device, the scanning speed is determined by a movement speed of the carrying device.

Thus, the controller is configured to determine and control the voltage and current applied to the X-ray source and the movement speed of the carrying device according to the weight of the inspected person.

In an embodiment of the present disclosure, it is set that a threshold of the weight is g, the voltage applied to the X-ray source is U, the current applied to the X-ray source is I, and the movement speed of the carrying device is v, such that if the weight of the person to be inspected is g, and if the voltage applied to the X-ray source is U, the current applied to the X-ray source is I and the movement speed of the carrying device is v, an X-ray radiation transmission image of a person to be inspected, which meets inspection requirements, may be obtained.

In an example which does not form part of the claimed invention, when the sensor senses that the weight of the person to be inspected is less than g, the controller controls the voltage applied to the X-ray source to be less than the voltage U, or controls the current applied to the X-ray source to be less than the current I, or controls the movement speed of the carrying device to be larger than the movement speed v.

In an example which does not form part of the claimed invention, when the sensor senses that the weight of the person to be inspected is less than g, the controller controls the voltage applied to the X-ray source to be less than the voltage U and controls the current applied to the X-ray source to be less than the current I.

In an embodiment of the present disclosure, when the sensor senses that the weight of the person to be inspected is less than g, the controller controls the voltage applied to the X-ray source to be less than the voltage U and control the movement speed of the carrying device to be larger than the movement speed v.

In an embodiment of the present disclosure, when the sensor senses that the weight of the person to be inspected is less than g, the controller controls the current applied to the X-ray source to be less than the current I and controls the movement speed of the carrying device to be larger than the movement speed v.

In an embodiment of the present disclosure, when the sensor senses that the weight of the person to be inspected is less than g, the controller controls the voltage applied to the X-ray source to be less than the voltage U, controls the current applied to the X-ray source to be less than the current I, and controls the movement speed of the carrying device to be larger than the movement speed v.

Specifically, the inventors provide following specific examples of control parameters.

When the weight of the person to be inspected is not less than g, the controller controls the voltage applied to the X-ray source to be U, controls the current applied to the X-ray source to be I and controls the movement speed of the carrying device to be v.

When the weight of the person to be inspected is not less than 0.8g and less than g, the controller controls the voltage applied to the X-ray source to be U, controls the current applied to the X-ray source to be 0.781 and controls the movement speed of the carrying device to be 1.2v.

When the weight of the person to be inspected is not less than 0.6g and less than 0.8g, the controller controls the voltage applied to the X-ray source to be 0.94U, controls the current applied to the X-ray source to be 0.641 and controls the movement speed of the carrying device to be 1.5v.

When the weight of the person to be inspected is not less than 0.4g and less than 0.6g, the controller controls the voltage applied to the X-ray source to be 0.88U, controls the current applied to the X-ray source to be 0.541 and controls the movement speed of the carrying device to be 2v.

When the weight of the person to be inspected is less than 0.4g, the controller controls the voltage applied to the X-ray source to be 0.84U, controls the current applied to the X-ray source to be 0.51 and controls the movement speed of the carrying device to be 2.5v.

Thereby, the voltage and current applied to the X-ray source and the movement speed of the carrying device may be determined according to the weight of the person to be inspected.

The above settings for the voltage, the current and the movement speed are only examples, may be adjusted by those skilled in the art as required and are not limitative to the present disclosure.

According to the embodiment shown in Fig. 1, the carrying device 51 is a conveyer belt. An arrow shown on the conveyer belt indicates a direction in which the person to be inspected is conveyed. The X-ray source 1 and the detector 2 are arranged on either side of the conveyer belt, the X-ray sources provides X-ray radiation 11 for scanning the human body to be inspected, and the detector 2 receives X-ray radiation transmitting through the human body to be inspected and generates a transmission signal. The controller 4 may be arranged below the X-ray source 1. Of course, the controller 4 may also be arranged at other position. The X-ray source 1 and the detector 2 are arranged at positions directly facing each other.

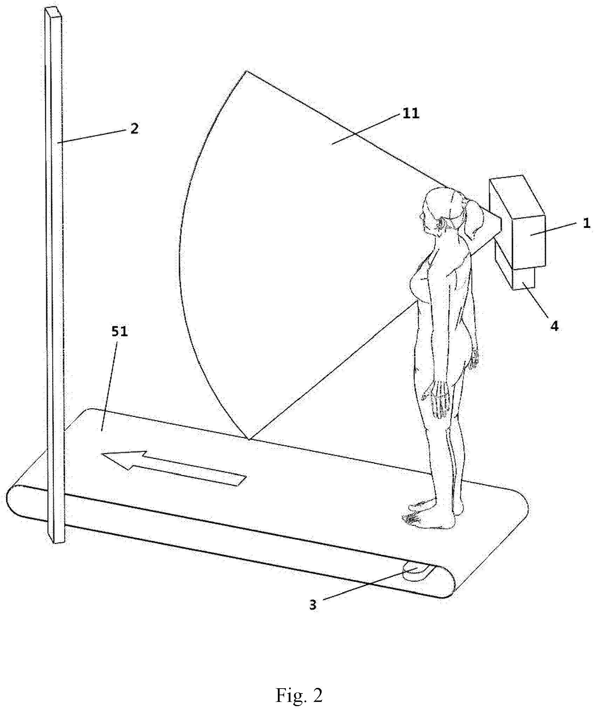

As shown in Fig. 2, there is illustrated a variation of the embodiment shown in Fig. 1. The X-ray source 1 and the detector 2 are respectively arranged on either side of the conveyer belt; the embodiment shown Fig. 2 is different from the embodiment shown in Fig. 1 in that the X-ray source 1 and the detector 2 are not arranged to directly face each other, instead of, are respectively arranged on sides of two ends of the conveyer belt 51. In an example, the X-ray source 1 is arranged on a side of an initial position end of the conveyer belt 51, where the security inspection of the person to be inspected is started, and the detector 2 is arranged on a side of a termination position of the conveyer belt 51, where the security inspection of the person to be inspected is completed.

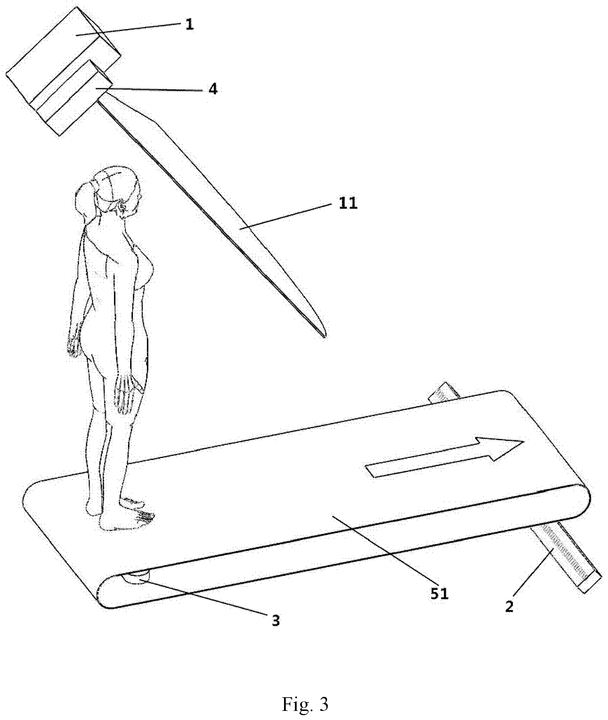

As shown in Fig. 3, there is illustrated a variation of the embodiment shown in Fig. 1. The embodiment shown Fig. 3 is different from the embodiment shown in Fig. 1 in that the detector 2 is arranged below one end of the conveyer belt 51 and the X-ray source 1 is arranged above the other end of the conveyer belt 51.

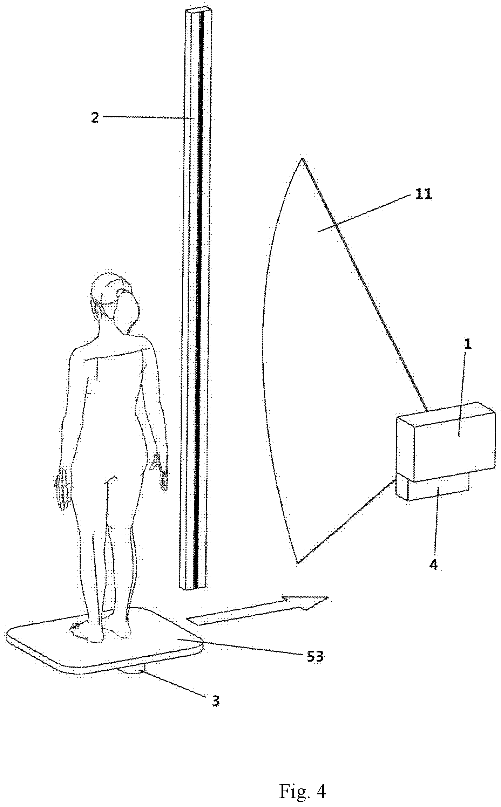

Fig. 4 shows a human body security inspection system according to another embodiment of the present disclosure. The embodiment shown in Fig. 4 is different from the embodiment shown in Fig. 1 in that the carrying device is a pallet 53, which carries the person to be inspected to move in a direction indicated by the arrow, the X-ray source 1 and the detector 2 are respectively arranged on either side of a movement path, and the sensor 3 is arranged at the underside of the pallet 53.

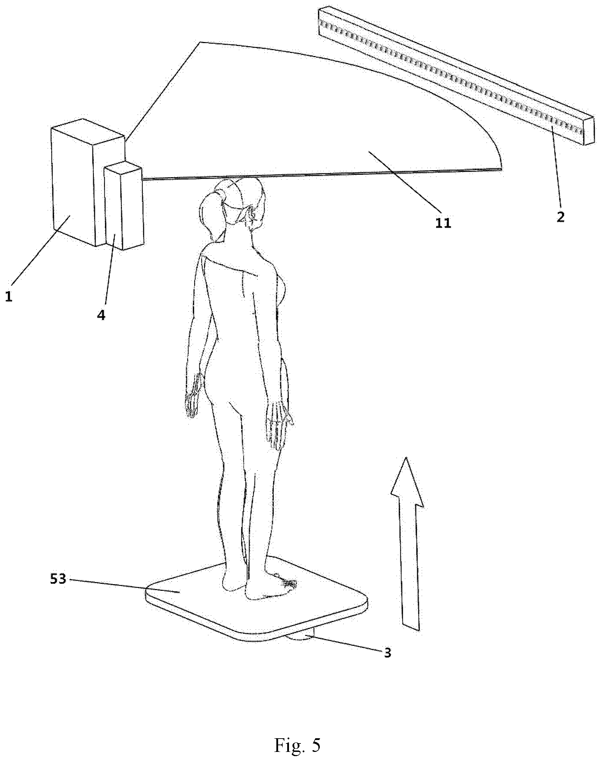

Fig. 5 shows a variation of the embodiment shown in Fig. 4. The pallet 53 moves in a horizontal direction in the embodiment shown in Fig. 4, while in the embodiment shown in Fig. 5, the pallet 53 moves in a vertical direction, and the X-ray source 1 and the detector 2 are respectively arranged on either side of a movement path.

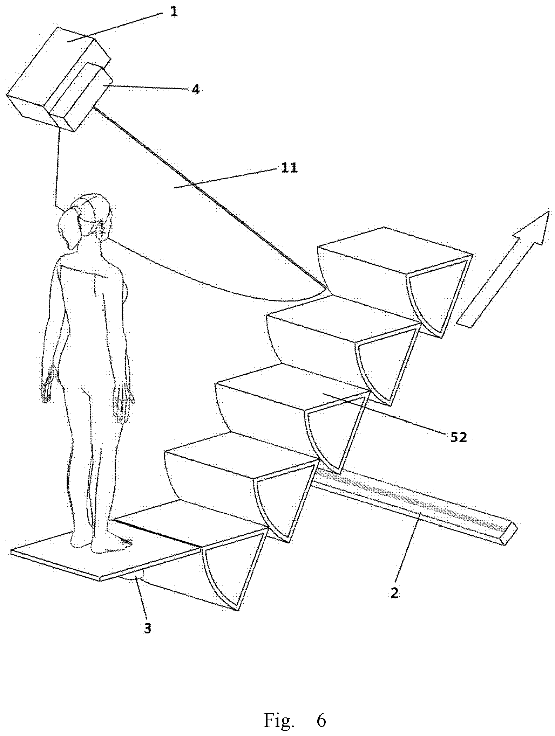

Fig. 6 shows a human body security inspection system according to a further embodiment of the present disclosure. The embodiment shown in Fig. 6 is different from the embodiment shown in Fig. 1 or Fig. 4 in that the carrying device is an escalator 52, which carries the person to be inspected to move in an arrow direction shown in Fig. 6, the sensor 3 is arranged at a lower portion of an initial position of the escalator, the X-ray source 1 is arranged above the escalator 52, and the detector 2 is correspondingly arranged below the escalator 52.

Configurations or arrangements shown in Fig. 2 to Fig. 6 that are the same as those shown in Fig. 1 will not be described again.

As described above, the present disclosure provides embodiments of human body security inspection systems that are provided with different carrying devices, and arrangements of the X-ray source and the detector may be changed as the carrying device varies. Further, the present disclosure is not limited to the carrying devices described in the above embodiments, and other carrying devices and thus other arrangements of the X-ray source and the detector may be utilized by those skilled in the art. The above exemplary embodiments should not be construed as being limitative to the present invention.

By using the human body security inspection apparatus as described above, the present disclosure further provides a method for human body security inspection performed, comprising steps of:
obtaining the weight of the human body, which comprises obtaining the weight of the human body by the sensor after the human body to be inspected enters the human body security inspection system,
scanning the human body, which comprises acquiring information about the weight of the human body from the sensor by the controller, and controlling by the controller the voltage or current applied to the X-ray source and the movement speed of the carrying device based on the information about the weight of the human body so that the human body is scanned, and
finishing the security inspection, which comprises obtaining the X-ray radiation transmission image of the human body based on the scanning of the human body, thereby finishing the security inspection of the human body

According to the human body security inspection apparatus and the method for human body security inspection, the quality of image for a person having a fatter body can be ensured without being degraded, and for a person having a thinner body, absorption dosage is reduced and security may be improved by changing the voltage and the current applied to the X-ray source and the movement speed of the carrying device without degrading the quality of image. In addition, the maximum human body absorption dosage which can be outputted during a single scan may be restricted, such that the radiation security is controllable, and for the whole of inspected persons, an average absorption dosage is reduced, an average scanning speed is increase, an average scanning time is decreased, and an overall social cost in radiation security and time for performing transmission inspection operations on persons is reduced.

## Claims

1. A human body security inspection system, comprising:
an X-ray source (1) configured to provide X-ray radiation for scanning a human body to be inspected,
a detector (2) configured to receive X-ray radiation transmitting through the human body to be inspected and generate a transmission signal,
a sensor (3) configured to obtain the weight of the human body to be inspected, and
a controller (4) configured to receive a signal from the sensor and obtain the weight of the human body to be inspected based on the signal from the sensor,
**characterized in that**
the system further comprises a carrying device (51, 52, 53) configured to carry and move the human body to be inspected in a direction such that the human body is scanned and the controller is further configured to determine and control a voltage or current applied to the X-ray source and a movement speed of the carrying device according to the obtained weight.

2. The human body security inspection system according to claim 1, wherein,
the sensor is arranged at an entering position or an initial position of the carrying device, such that once the human body to be inspected enters the carrying device, the weight of the human body to be inspected is allowed to be obtained by sensor.

3. The human body security inspection system according to claim 1, wherein,
the carrying device is one of a conveyer belt, a pallet and an escalator.

4. A method for human body security inspection performed by using the human body security inspection system as defined in claim 1, the method comprising steps of:
obtaining the weight of the human body, which comprises obtaining the weight of the human body by the sensor (3) after the human body to be inspected enters the human body security inspection system,
scanning the human body, which comprises acquiring information about the weight of the human body from the sensor by the controller (4), and controlling by the controller, based on the information about the weight of the human body, the voltage or current applied to the X-ray source (1) and the movement speed of the carrying device (51, 52, 53) so that the human body is scanned, and
finishing the security inspection, which comprises obtaining the X-ray radiation transmission image of the human body based on the scanning of the human body, thereby finishing the security inspection of the human body.

## Patentansprüche

1. System zur Sicherheitsüberprüfung des menschlichen Körpers, umfassend:
eine Röntgenstrahlungsquelle (1), die dazu ausgelegt ist, Röntgenstrahlung zum Abtasten eines zu überprüfenden menschlichen Körpers bereitzustellen,
einen Detektor (2), der dazu ausgelegt ist, Röntgenstrahlung zu empfangen, die den zu überprüfenden menschlichen Körper durchdringt, und ein Transmissionssignal zu erzeugen,
einen Sensor (3), der dazu ausgelegt ist, das Gewicht des zu überprüfenden menschlichen Körpers zu erhalten, und
eine Steuerung (4), die dazu ausgelegt ist, ein Signal von dem Sensor zu empfangen und das Gewicht des zu überprüfenden menschlichen Körpers basierend auf dem Signal von dem Sensor zu erhalten,
**dadurch gekennzeichnet, dass**
das System ferner eine Tragvorrichtung (51, 52, 53) umfasst, die dazu ausgelegt ist, den zu überprüfenden menschlichen Körper in eine Richtung zu befördern, sodass der menschliche Körper abgetastet wird, und die Steuerung ferner dazu ausgelegt ist, eine an die Röntgenstrahlungsquelle angelegte Spannung oder einen daran angelegten Strom und eine Bewegungsgeschwindigkeit der Tragvorrichtung gemäß dem erhaltenen Gewicht zu bestimmen und zu steuern.

2. System zur Sicherheitsüberprüfung des menschlichen Körpers nach Anspruch 1, wobei der Sensor an einer Eintrittsposition oder einer Anfangsposition der Tragvorrichtung angeordnet ist, sodass, sobald der zu überprüfende menschliche Körper die Tragvorrichtung betritt, das Gewicht des zu überprüfenden menschlichen Körpers von dem Sensor erhalten werden kann.

3. System zur Sicherheitsüberprüfung des menschlichen Körpers nach Anspruch 1, wobei die Tragvorrichtung eins von einem Förderband, einer Plattform und einer Rolltreppe ist.

4. Verfahren zur Sicherheitsüberprüfung des menschlichen Körpers, das mithilfe des Systems zur Sicherheitsüberprüfung des menschlichen Körpers nach Anspruch 1 durchgeführt wird, wobei das Verfahren folgende Schritte umfasst:
Erhalten des Gewichts des menschlichen Körpers, das das Erhalten des Gewichts des menschlichen Körpers durch den Sensor (3) umfasst, nachdem der zu überprüfende menschliche Körper das System zur Sicherheitsüberprüfung des menschlichen Körpers betreten hat,
Abtasten des menschlichen Körpers, das das Erfassen einer Information zum Gewicht des menschlichen Körpers von dem Sensor durch die Steuerung (4) umfasst, und Steuern durch die Steuerung, basierend auf der Information zum Gewicht des menschlichen Körpers, der an die Röntgenstrahlungsquelle (1) angelegten Spannung oder des daran angelegten Stroms und der Bewegungsgeschwindigkeit der Tragvorrichtung (51, 52, 53), sodass der menschliche Körper abgetastet wird, und
Abschließen der Sicherheitsüberprüfung, das das Erhalten des Röntgenstrahlungstransmissionsbildes des menschlichen Körpers basierend auf dem Abtasten des menschlichen Körpers umfasst, wodurch die Sicherheitsüberprüfung des menschlichen Körpers abgeschlossen wird.

## Revendications

1. Système d'inspection de sécurité du corps humain, comprenant :
une source de rayons X (1) configurée pour délivrer un rayonnement de rayons X destiné à analyser un corps humain à inspecter,
un détecteur (2) configuré pour recevoir un rayonnement de rayons X transmis à travers le corps humain à inspecter et générer un signal de transmission,
un capteur (3) configuré pour obtenir le poids du corps humain à inspecter, et
un contrôleur (4) configuré pour recevoir un signal provenant du capteur et obtenir le poids du corps humain à inspecter sur la base du signal du capteur,
**caractérisé en ce que**
le système comprend en outre un dispositif de support (51, 52, 53) configuré pour supporter et déplacer le corps humain à inspecter dans une direction telle que le corps humain est analysé et le contrôleur est également configuré pour déterminer et contrôler une tension ou un courant appliqué à la source de rayons X et une vitesse de déplacement du dispositif de support en fonction du poids obtenu.

2. Système d'inspection de sécurité du corps humain selon la revendication 1, dans lequel
le capteur est disposé à une position d'entrée ou une position initiale du dispositif de support, de telle sorte qu'une fois que le corps humain à inspecter est entré dans le dispositif de support, le poids du corps humain à inspecter peut être obtenu par le capteur.

3. Système d'inspection de sécurité du corps humain selon la revendication 1, dans lequel
le dispositif de support est soit une bande transporteuse, soit un plateau, soit un escalier mécanique.

4. Procédé d'inspection de sécurité du corps humain effectué au moyen du système d'inspection de sécurité du corps humain tel que défini dans la revendication 1, le procédé comprenant des étapes de :
obtention du poids du corps humain, qui comprend l'obtention du poids du corps humain par le capteur (3) après que le corps humain à inspecter est entré dans le système d'inspection de sécurité du corps humain,
analyse du corps humain, qui comprend l'acquisition d'informations sur le poids du corps humain à partir du capteur par le contrôleur (4),
et contrôle par le contrôleur, sur la base des informations sur le poids du corps humain, de la tension ou du courant appliqué à la source de rayons X (1) et de la vitesse de déplacement du dispositif de support (51, 52, 53), de telle sorte que le corps humain est analysé, et
achèvement de l'inspection de sécurité, qui comprend l'obtention de l'image de transmission du rayonnement de rayons X du corps humain sur la base de l'analyse du corps humain, achevant ainsi l'inspection de sécurité du corps humain.
